(19)

Europäisches Patentamt
European Patent Office
Office européen des brevets

(11) **EP 3 826 283 A1**

(12) **EUROPEAN PATENT APPLICATION**

(43) Date of publication:
26.05.2021 Bulletin 2021/21

(21) Application number: 19275128.7

(22) Date of filing: 21.11.2019

(51) Int Cl.:
*H04N 5/225* (2006.01)     *G02B 3/00* (2006.01)
*G02B 30/26* (2020.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
KH MA MD TN

(71) Applicant: BAE SYSTEMS plc
London SW1Y 5AD (GB)

(72) Inventor: **The designation of the inventor has not yet been filed**

(74) Representative: **BAE SYSTEMS plc**
**Group IP Department**
**Warwick House**
**P.O. Box 87**
**Farnborough Aerospace Centre**
**Farnborough Hampshire GU14 6YU (GB)**

(54) **IMAGING APPARATUS COMPRISING AT LEAST A LIGHT SOURCE AND A PLENOPTIC CAMERA**

(57)     An imaging apparatus is described. The imaging apparatus comprises a two-dimensional imaging array comprising N x M imaging devices, wherein N and M are positive integers and wherein respective imaging devices comprise an aperture lens, a two-dimensional lenslet array and an electromagnetic radiation, EMR, detector, wherein the lenslet array comprises at least P x Q lenslets, wherein P and Q are positive integers, and wherein the lenslet array is arranged between the aperture lens and the detector; and a set of S coherent EMR sources, wherein S is a positive integer, wherein respective sources are arrangeable to irradiate an object with coherent EMR at respective angles of incidence.

I3

**Fig. 12**

EP 3 826 283 A1

**Description**

**Field**

The present invention relates to imaging apparatuses. Particularly, the present invention relates to an imaging apparatus for imaging distant objects.

**Background to the invention**

Electromagnetic radiation (EMR) imaging, for example optical infrared, visible or ultraviolet imaging, from large stand-off distances typically results in low spatial resolution. When imaging a distant object, diffraction blur is a primary cause of resolution loss. Diffraction blur is typically caused by a limited angular extent of an aperture lens. Hence, it is desirable to use an aperture lens having a relatively large diameter for imaging such distant objects. For example, when imaging a distant object at a distance of z of 1 km, using an aperture lens having a relatively smaller diameter d of 12.5 mm, the diffraction limited resolution at that range is given by $\lambda z/d \approx 50$ mm diameter at a wavelength of 625 nm. This is the diffraction blur size (also known as spatial resolution) at the object, such that smaller features (i.e. less than 50 mm diameter) are unresolved i.e. blurred out. This means that facial and/or number plate recognition is not possible with this imaging system example. If an aperture lens, having the same focal length but a relatively larger diameter d of 125 mm, is used, a theoretical resolution spot size on the 1 km distant object is reduced to $\approx 5$ mm diameter at 625 nm. In this way, for example, facial and/or number plate recognition is possible. However, telescopic (also known as telephoto) lenses having comparable f-numbers (f/#s) are typically an order of magnitude more expensive, larger and/or heavier than equivalent portrait lenses, thereby precluding their use in certain applications. Furthermore, atmospheric turbulence may limit an effective useful resolution diameter of the aperture lens to a diameter equal to the Fried parameter (also known as the Fried coherence length), such that a practical (i.e. in use or achievable) diffraction spot size is increased compared with the theoretical diffraction spot size of the lens itself. Thus, the achievable spatial resolution may still be insufficient to resolve object features of interest such that facial and/or number plate recognition is not possible, even when using aperture lenses having sufficiently large diameters to not be limited by the optical aperture diffraction considerations.

Hence, there is a need to improve imaging, particularly EMR imaging of distant objects.

**Summary of the Invention**

It is one aim of the present invention, amongst others, to provide an imaging apparatus, a method of imaging an object using such an apparatus, a method of providing an image from EMR data detected by such an apparatus and a computer arranged to implement such a method of providing an image which at least partially obviates or mitigates at least some of the disadvantages of the prior art, whether identified herein or elsewhere. For instance, it is an aim of embodiments of the invention to provide an imaging apparatus that has an improved achievable spatial resolution, compared with conventional imaging apparatus, for imaging distant objects, such as at a distance of z of 1 km or more. For instance, it is an aim of embodiments of the invention to provide a method of imaging an object using such an apparatus that enables resolution of object features of interest of distant objects, such as at a distance of z of 1 km or more. For example, it is an aim of embodiments of the invention to provide a method of providing an image from EMR data detected by such an apparatus, having an improved achievable spatial resolution. For example, it is an aim of embodiments of the invention to provide a computer arranged to implement such a method of providing an image and/or from EMR data detected by such an apparatus.

A first aspect provides an imaging apparatus comprising:

a two-dimensional imaging array comprising N x M imaging devices, wherein N and M are positive integers and wherein respective imaging devices comprise an aperture lens, a two-dimensional lenslet array and an electromagnetic radiation, EMR, detector, wherein the lenslet array comprises at least P x Q lenslets, wherein P and Q are positive integers, and wherein the lenslet array is arranged between the aperture lens and the detector; and
a set of S coherent EMR sources, wherein S is a positive integer, wherein respective sources are arrangeable to irradiate an object with coherent EMR at respective angles of incidence.

A second aspect provides a method of imaging an object comprising:

irradiating the object with coherent EMR at respective angles of incidence using a set of S coherent EMR sources, wherein S is a positive integer; and
imaging the object by detecting at least a part of the coherent EMR reflected therefrom using a two-dimensional imaging array comprising N x M imaging devices, wherein N and M are positive integers and wherein respective imaging devices comprise an aperture lens, a two-dimensional lenslet array and an electromagnetic radiation, EMR, detector, wherein the lenslet array comprises at least P x Q lenslets, wherein P and Q are positive integers, and wherein the lenslet array is arranged between the aperture lens and the detector.

A third aspect provides a computer comprising at least a processor and a memory, the computer arranged to provide an image of an object from EMR detected by the apparatus according to the first aspect, wherein the computer is arranged to:

receive data corresponding to the detected EMR from the respective detectors of the N x M imaging devices;
for each respective detector, correct the data thereof for aberrations using, at least in part, images arising from the respective lenslet array;
for each respective detector, determine a transform of the corrected data;
combine the transforms for each respective detector, thereby providing a combined transform for the N x M imaging devices; and
determine the image of the object from the combined transform.

A fourth aspect provides a method of providing an image from EMR detected by the apparatus according to the first aspect, the method implemented on a computer comprising at least a memory and a processor, the method comprising:

receiving data corresponding to the detected EMR from the respective detectors of the N x M imaging devices;
for each respective detector, correcting the data thereof for aberrations using, at least in part, images arising from the respective lenslet array;
for each respective detector, determining a transform of the corrected data;
combining the transforms for each respective detector, thereby providing a combined transform for the N x M imaging devices; and
determining the image of the object from the combined transform.

A fifth aspect provides use of a coherent EMR source for irradiating an object for plenoptic imaging.

## Detailed Description of the Invention

### *Imaging apparatus*

A first aspect provides an imaging apparatus comprising:

a two-dimensional imaging array comprising N x M imaging devices, wherein N and M are positive integers and wherein respective imaging devices comprise an aperture lens, a two-dimensional lenslet array and an electromagnetic radiation, EMR, detector, wherein the lenslet array comprises at least P x Q lenslets, wherein P and Q are positive integers, and wherein the lenslet array is arranged between the aperture lens and the detector; and
a set of S coherent EMR sources, wherein S is a positive integer, wherein respective sources are arrangeable to irradiate an object with coherent EMR at respective angles of incidence.

That is, the imaging apparatus comprises at least one imaging device and at least one coherent EMR source. In this way, higher spatial resolution and correction of wave-front distortions, for example due to atmospheric turbulence, of the object may be improved compared with a conventional imaging apparatus.
Particularly, by imaging the object via the lenslet arrays of the respective imaging devices, wave-front distortions, for example due to atmospheric turbulence, at the aperture lenses of the respective imaging devices may be corrected for the respective imaging devices. Such imaging via a single lenslet array only, for a single imaging device and without irradiation of the object by a coherent EMR source, may be known as plenoptic imaging. In this way, wave-front distortion corrected Fourier transforms of the object at the respective aperture lenses of the respective imaging devices, may be provided. That is, an array of N x M wave-front distortion corrected Fourier transforms of the object may be provided.
Furthermore, by irradiating the object with the coherent EMR at the respective angles of incidence, thereby imaging the object via the N x M aperture lenses of the respective imaging devices, an effective aperture (also known as an artificial and/or synthetic aperture) size thus provided by the N x M imaging devices, is larger than an aperture size of a single imaging device. Such imaging, for N x M imaging devices with irradiation of the object by a coherent EMR source but without imaging via respective lenslet arrays, may be known as synthetic aperture visible imaging (SAVI). In this way, a combined Fourier transform of the object across a plane, for example, of the N x M imaging devices may be provided, having improved spatial resolution and with correction of wave-front distortions, for example due to atmospheric turbulence, compared with a single imaging device.

Especially, the combined Fourier transform of the object across the plane, for example, of the N x M imaging devices is provided from the array of N x M wave-front distortion corrected Fourier transforms.

That is, the imaging apparatus provides imaging of the object at higher spatial resolution compared to that of the individual imaging devices that make up the imaging apparatus and with correction of wave-front distortions across the combined input optical apertures of the N x M imaging devices, for example due to atmospheric turbulence, allowing imaging of the object at increased distances, for example in a range from 500 m to 50 km, preferably in a range from 1 km to 25 km, more preferably in a range from 2 km to 10 km.

In other words, plenoptic imaging enables atmospheric turbulence aberrations to be corrected while still maintaining good optical resolution performance, while the N x M imaging devices provide an enlarged synthetic aperture, when used with coherent illumination. Hence, the imagining apparatus provides significant imaging advantages for long range imaging in the presence of air turbulence, compared with conventional imaging apparatus.

The imaging apparatus is thus suitable for applications such as security or military applications requiring optically imaging objects at ranges of up to 10 km when atmospheric turbulence severely limits the spatial resolution of traditional telephoto lens imaging systems without the use of adaptive optical aberration correction systems.

The most challenging source of resolution impairment for long range imaging, aside from obscurants such as fog or rain, is due to local refractive index variations along the optical path between imager and the object caused by random air turbulence. Air turbulence can reduce the effective optical aperture of a passive optical imager for resolution purposes to the Fried coherence length $r_0$ of typically ~2 cm to ~5 cm. Time evolution of atmospheric air turbulence is typically 10s of Hz to 100s of Hz. To image a face at 1 km to a resolution of at least 32 x 32 'pixels' needed to positively identify a face would require an effective diffraction limited optical aperture of 205 mm. Correction of air turbulence optical aberrations will generally be needed for high resolution long range imaging. This requires: pre-correction using adaptive optics at typically 10 times the Greenwood frequency for air turbulence (i.e. at an update rate of 100Hz to 1000's Hz) and/or post-image capture computational correction. Good image resolutions in processed image generally requires signal to noise levels of ≥30dB. Or long capture times for the alternative approach of lucky imaging.

The imaging apparatus comprises the two-dimensional imaging array comprising the N x M imaging devices, wherein N and M are positive integers. It should be understood that the imaging devices are arranged (i.e. positioned) in a two-dimensional array, for example a planar array. In this way, arrangement of the N x M imaging devices is simplified. It should be understood that by being arranged in a planar array, respective aperture lenses, two-dimensional lenslet arrays and/or EMR detectors of the N x M imaging devices are positioned on respective mutually-parallel planes. In one alternative example, the N x M imaging devices are arranged in a three-dimensional array, for example a non-planar array such as a concave array, for example a part of a spherical surface, such as a spherical sector, a spherical cap, a spherical dome, or a spherical wedge, wherein the imaging devices are oriented radially inwards. In this way, a distance from the object to each imaging device may be more constant. It should be understood that by being arranged in a non-planar array, such as a concave array, for example a part of a spherical surface, respective aperture lenses, two-dimensional lenslet arrays and/or EMR detectors of the N x M imaging devices are positioned on respective mutually-parallel surfaces. In one example, N and/or M is in a range from 2 to 100, preferably in a range from 3 to 50, more preferably in a range from 4 to 25, most preferably in a range from 5 to 10, for example 5, 6, 7, 8, 9 or 10. In one example, N is equal to M. In one example, the array comprises and/or is a regular array, wherein the N x M imaging devices are regularly (i.e. periodically) arranged. In one example, the array comprises and/or is an irregular array, wherein the N x M imaging devices are irregularly (i.e. non-periodically) arranged. In one example, the array comprises and/or is a quadrilateral array, such as a rectangular or square array, wherein the imaging devices are equally spaced, for example. In one example, the array comprises and/or is a circular array, wherein the imaging devices are arranged in concentric, equally-spaced rings, for example. In one preferred example, the array comprises and/or is a regular rectangular or square array, wherein the N x M imaging devices are regularly (i.e. periodically) arranged and are equally spaced.

The respective imaging devices comprise the aperture lens, the two-dimensional lenslet array and the electromagnetic radiation, EMR, detector.

The lenslet array comprises the at least P x Q lenslets, wherein P and Q are positive integers. Generally, lenslets (also known as microlenses) are small lenses, typically having a diameter less than 1 mm and often as small as 10 $\mu$m. The small sizes of the lenses means that a simple design can give good optical quality but sometimes unwanted effects arise due to optical diffraction at the small features. A typical microlens may be a single optical element having a plane surface and an opposed spherical convex surface to refract the light. Usually, a substrate that supports a microlens is thicker than the microlens and this has to be taken into account in design. More advanced microlenses may have aspherical surfaces and/or may use several layers of optical material to achieve their required design performance. Another type of microlens, known as a gradient-index (GRIN) lens, has two flat and parallel surfaces and the focusing action is obtained by a variation of refractive index across this lens. Another type of microlens achieves focusing by both a variation in refractive index and by surface shape. Another type of microlens, known as micro-Fresnel lens, focuses light by refraction using a set of concentric curved surfaces. Such micro-Fresnel lenses may be very thin and lightweight. Another type of microlens, known as a binary-optic microlens, focuses light by diffraction using grooves having stepped edges or multilevels that approximate an ideal shape. These binary-optic micro-lenses may be fabricated using conventional semiconductor processes such as photolithography and/or reactive-ion etching (RIE). Microlens arrays include multiple lenses formed in one-dimensional or two-dimensional arrays, usually on supporting substrates. If the individual microlenses have circular apertures and do not allowed overlap, the individual microlenses may be arranged in hexagonal arrays (also known as triangular packing), for example, to increase and/or maximise coverage by the microlenses of the substrates. Triangular packing of circles having the same radius has a packing density of 0.9069. Other packings based on uniform tiling are known, including square packing, hexagonal packing, elongated triangular packing, trihexagonal packing, snub square packing, truncated square packing, truncated hexagonal packing, rhombitrihexagonal packing, snub hexagonal packing, snub hexagonal (mirrored) packing and truncated trihexagonal packing. However, gaps between the individual microlenses remain, which may be reduced by making the microlenses with non-circular apertures and/or by having microlenses of different sizes, such that smaller microlenses are arranged in the gaps between larger microlenses. Typically for optical sensor arrays, the microlenses focus light onto active regions of the EMR detector, such as photo-diode surfaces, rather than onto non-active regions of the EMR detector, such as non-photosensitive areas. A fill-factor may be defined, being the ratio of the active refracting area (i.e. that area of the lenslet array which directs light to the photo-sensor) to the total contiguous area occupied by the lenslet array. Microlenses may be characterised by measured parameters such as focal length and quality of transmitted wavefront. Generally, since it is not practical to locate the principal planes of such small microlenses, measurements are often made with respect to the microlens or substrate surface. Where a microlens is used to couple light into an optical fibre, the focused wavefront may exhibit spherical aberration and light from different regions of the microlens aperture may be focused to different points on the optical axis. It is useful to know the distance at which the maximum amount of light is concentrated in the fibre aperture and these factors have led to new definitions for focal length. To enable measurements on microlenses to be compared, international standards have been developed.

In one example, the lenslets have a diameter in a range from 1 $\mu$m to 5 mm, preferably in a range from 3 $\mu$m to 3 mm, more preferably in a range from 10 $\mu$m to 1 mm, most preferably in a range from 100 $\mu$m to 500 $\mu$m. In one example, the lenslets comprise and/or are microlenses having respective plane surfaces and opposed spherical convex surfaces, microlenses having aspherical surfaces, microlenses having a plurality of layers of optical material, GRIN lenses, micro-Fresnel lenses, binary-optic microlenses and/or mixtures thereof. In one example, the lenslets have and/or provide circular apertures. In one example, the lenslets of the lenslet array are arranged in a hexagonal or a circular array. In one example, the lenslets of the lenslet array are packed with triangular packing. In one example, the lenslet array is arranged as described with respect to the imaging array, mutatis mutandis. In one example, the lenslets of the lenslet array are similar or identical. In one example, the lenslet array has a fill-ratio in a range from 60% to 100%, preferably in a range from 80% to 98%, more preferably in a range from 90% to 95%. In one example, P and Q are respectively in a range from 1 to 10,000,000, preferably in a range from 100 to 1,000,000, more preferably in a range from 1,000 to 100,000.

In one example, the respective imaging devices comprise a mask, in place of and/or in addition to the lenslet array, as described below in more detail. In one example, the mask comprises P x Q perforations (also known as apertures) therethrough. The perforations may be as described with respect to the lenslets, mutatis mutandis.

The lenslet array is arranged between the aperture lens and the detector. In one example, the lenslet array is arranged at, in front of or behind the focal plane of the aperture lens. In one example, the lenslet array is arrangable at, in front of or behind the focal plane of the aperture lens (i.e. a position of the lenslet array may be changed, for example by moving the lenslet array and/or the aperture lens).

In one example, the respective two-dimensional lenslet arrays are arranged spaced apart from the respective aperture lenses by respective focal lengths thereof. In one example, the respective detectors are arranged spaced apart from the respective lenslet arrays by respective focal lengths thereof.

In one example, the N x M imaging devices comprise a plenoptic camera (also known as a light field camera). In one example, each respective imaging device comprises and/or is a plenoptic camera, for example a similar or identical plenoptic camera.

In one example, there is provided an imaging apparatus comprising:

a two-dimensional imaging array comprising N x M plenoptic cameras, wherein N and M are positive integers; and a set of S coherent EMR sources, wherein S is a positive integer, wherein respective sources are arrangeable to irradiate an object with coherent EMR at respective angles of incidence.

That is, the imaging apparatus comprises at least one plenoptic camera and at least one coherent EMR source.

Generally, plenoptic cameras capture information about the light field emanating from a scene (i.e. the intensity of light in a scene) and also the direction that the light rays are travelling in space.

A standard plenoptic camera is a mathematical model used by researchers to compare different types of plenoptic cameras. By definition, the standard plenoptic camera has microlenses (i.e. a lenslet array) placed one focal length away from the image plane of a light sensor. Research has shown that its maximum baseline is confined to the main lens entrance pupil size which proves to be small compared to stereoscopic setups. This implies that the standard plenoptic camera may be intended for close range applications as it exhibits increased depth resolution at very close distances that can be metrically predicted based on the camera's parameters.

In one example, the N x M imaging devices comprise a standard plenoptic camera. In one example, each respective imaging device comprises and/or is a standard plenoptic camera, for example a similar or identical standard plenoptic camera.

A focused plenoptic camera is a type of plenoptic camera in which the lenslet array is positionable in front of or behind the focal plane of the aperture lens. This modification samples the light field in a way that trades angular resolution for higher spatial resolution. With this design, images can be post focused with a much higher spatial resolution than with images from the standard plenoptic camera. However, the lower angular resolution can introduce some unwanted aliasing artefacts.

In one example, the N x M imaging devices comprises a focused plenoptic camera (also known as a light field camera). In one example, each respective imaging device comprises and/or is a focused plenoptic camera, for example a similar or identical focused plenoptic camera.

A coded aperture camera is a type of plenoptic camera that includes a (low-cost) printed film mask instead of a lenslet array. This design overcomes several limitations of lenslet arrays in terms of chromatic aberrations and loss of boundary pixels, and allows higher-spatial resolution photos to be captured. However, this mask-based design reduces the amount of light that reaches the light detector compared with plenoptic cameras based on lenslet arrays.

In one example, the N x M imaging devices comprise a coded aperture camera. That is, such an imaging device does not include a lenslet array. In one example, each respective imaging device comprises and/or is a coded aperture camera, for example a similar or identical coded aperture camera.

Plenoptic cameras are good for imaging fast moving objects where auto focus may not work well, and for imaging objects where auto focus is not affordable or usable and may be used to produce accurate 3D models of objects.

Plenoptic cameras are available from Raytrix GmbH (Germany), for example.

The imaging apparatus comprises the set of S coherent EMR sources, wherein S is the positive integer. It should be understood that EMR provided by the EMR sources is temporally and/or spatially coherent. In one example, the set of S coherent EMR sources comprises monochromatic light sources, for example lasers or light emitting diodes. In one example, the set of S coherent EMR sources comprises a laser providing EMR having a predetermined wavelength and/or wavelength range. In one example, the EMR light sources are similar or identical, for example providing EMR having the same predetermined wavelength and/or the same wavelength range. In one example, the EMR light sources are different, for example providing EMR having different predetermined wavelengths and/or different wavelength ranges. In one example, the coherent EMR has a wavelength of $\leq 1\ \mu m$ (i.e. the predetermined wavelength is $\leq 1,000$ nm). In one example, the predetermined wavelength is in a range from 10 nm to 1,000 nm (i.e. ultraviolet, visible or infrared), in a range from 10 nm to 400 nm (i.e. ultraviolet), in a range from 700 nm to 1,000 nm (i.e. infrared), preferably in a range from 380 nm to 740 nm (i.e. visible). In one example, S is in a range from 1 to 100, preferably in a range from 2 to 50, more preferably in a range from 2 to 20, most preferably in a range from 2 to 10, for example 2, 3, 4, 5, 6, 7, 8, 9 or 10. In one example, the set of S coherent EMR sources comprises a gas laser for example a He-Ne laser, an Ar laser, a Kr laser, a Xe laser, a $N_2$ laser, a $CO_2$ laser, a CO laser and/or an excimer laser, a chemical laser for example a HF laser, a DF laser, a chemical oxygen-iodine laser (COIL) and/or an all gas-phase iodine laser (AGIL), a dye laser, a metal-vapour laser for example a He-Cd laser, a He-Hg laser, a He-Se laser, a He-Ag laser, a Sr laser, a Ne-Cu laser, a Cu laser, an Au Laser and/or a $Mn/MnCl_2$ laser, a solid state laser for example a ruby laser, a Nd:YAG laser, a NdCrYAG laser, a Nd:YLF laser, a Nd:YVO$_4$ laser, a Nf:YCOB laser, a Nd:glass laser, a Ti:sapphire laser, a Tm:YAG laser, a Yb:YAG laser, a Yb glass or ceramic laser, a Yb doped glass laser, a Hi:YAG laser, a Cr:ZnSe laser, and/or a Ce:LiSAF laser, a semiconductor laser for example a GaN laser, an InGaN laser, an AlGaInP or AlGaAs laser, an InGaAsP laser, a lead salt laser, a vertical cavity surface emitting laser (VCSEL), a quantum cascade laser and/or a hybrid Si laser.

The respective sources are arrangeable to irradiate the object with the coherent EMR at the respective angles of incidence. That is, the respective EMR sources provide EMR having a sufficient brightness, intensity and/or luminosity at the object to irradiate the object and such that at least some of the EMR is reflected back to the imaging device, for example by the respective EMR sources having sufficient output power. Generally, brightness of the EMR provided by the respective EMR sources is dependent, at least in part, on a power of the source, a distance from the source to the object and the intervening medium, such as air. In one example, a beam distance of the respective EMR sources is in a range from 500 m to 50 km, preferably in a range from 1 km to 25 km, more preferably in a range from 2 km to 10 km. It should be understood that the respective EMR sources are mutually spaced apart. Additionally, angular orientations of the respective EMR sources may be different. In this way, the respective EMR sources may irradiate the object at different angles of incidence.

In one example, N ≥ 1, M ≥ 1 and/or S ≥ 1. If N = 1 and M = 1 (i.e. the imaging apparatus comprises one imaging device), for example, the imaging apparatus may be moved, for example translated parallel to the two-dimensional array of imaging devices, between acquiring successive images, for example a first image and a second image. Hence, successive (preferably overlapping) images from adjacent positions may be acquired, using coherent EMR. Enhanced resolution may be obtained by combining the first and second images, as described below in more detail. This is generally suitable for imaging stationary objects.

In one example, N ≥ 1, M ≥ 2 and S ≥ 1. If N = 1 and M = 2 (i.e. the imaging apparatus comprises two imaging devices), two images from adjacent positions may be acquired, for example simultaneously, using coherent EMR. Enhanced resolution may be obtained by combining the two images, as described below in more detail. This is generally suitable for imaging stationary objects, moving objects and/or where the imaging apparatus is moving relative to the objects, such as if imaging apparatus is mounted in a moving vehicle.

In one example, N ≥ 2, M ≥ 2 and S ≥ 1. If N = 2 and M = 2 (i.e. the imaging apparatus comprises four imaging devices), four images from adjacent positions may be acquired, for example simultaneously, using coherent EMR. Enhanced resolution may be obtained by combining the four images, as described below in more detail. This is generally suitable for imaging stationary objects, moving objects and/or where the imaging apparatus is moving relative to the objects, such as if imaging apparatus is mounted in a moving vehicle.

In one example, S = 1 and the EMR source is arrangeable in a first configuration to irradiate the object with coherent EMR at a first angle of incidence and in a second configuration to irradiate the object with coherent EMR at a second angle of incidence. For example, a first image may be acquired corresponding to the first configuration and a position and/or orientation of the EMR source may be changed to the second configuration, to thereby irradiate the object at a different angle of incidence, and a second image acquired corresponding to the second configuration. Enhanced resolution may be obtained by combining the first and second images, as described below in more detail. This is generally suitable for imaging stationary objects.

In one example, S ≥ 2 and wherein the apparatus is arranged to successively irradiate the object using the respective EMR sources. For example, a first image may be acquired corresponding to irradiating the object with a first EMR source and thereafter, a second image acquired corresponding to irradiating the object with a second EMR source. Enhanced resolution may be obtained by combining the first and second images, as described below in more detail. This is generally suitable for imaging stationary objects.

In one example, P ≥ 8 and Q ≥ 8, preferably wherein P ≥ 32 and Q ≥ 32. That is, the imaging apparatus may comprise at least 64 imaging devices, preferably at least 1,024 imaging devices. A corresponding plurality of images from the imaging devices may be acquired, for example simultaneously and/or successively. Enhanced resolution may be obtained by combining the plurality of images, as described below in more detail.

In one example, the N x M imaging devices are configured to each acquire R images of the object, wherein R is a positive integer, for example successively or simultaneously. Enhanced resolution may be obtained by combining the N x M x R images, as described below in more detail. In one example, R ≥ 1. In one example, if N x M = 1, R ≥ 2.

In one example, the aperture lens has a focal length of ≥ 28 mm, for example in a range from 28 mm to 5,200 mm, preferably in a range from 50 mm to 1,700 mm for example 1,200 mm or 1,600 mm, more preferably in a range from 100 mm to 800 mm, for example 200 mm, 300 mm, 500 mm or 600 mm. In this way, images of long-range objects may be acquired.

In one example, the respective detectors (also known as image sensors) comprise a complementary metal oxide (CMOS) detector (also known as a CMOS sensor) or a charge coupled device (CCD) detector (also known as a CCD detector).

Generally, CMOS sensors are cheaper and have lower power consumption than CCD sensors. CCD sensors are preferred for high end broadcast quality video cameras while CMOS sensors are preferred in still photography and consumer goods where overall cost is more important. Typically, CMOS sensors have smaller effective areas than CCD sensors, since they include one amplifier per photodiode, thereby capturing fewer photons. This may be overcome using microlenses in front of each photodiode, which focus light into the photodiode that would have otherwise hit the amplifier and not be detected. It should be understood that these microlenses are distinct from the lenslet array. A hybrid CCD/CMOS architecture (also known as sCMOS) combines CMOS readout integrated circuits (ROICs) that are bump bonded to a CCD imaging substrate. Another image sensor uses the very fine dimensions available in modern CMOS technology to implement a CCD like structure entirely in CMOS technology. Preferably, the respective detectors comprise and/or are CCD sensors.

A second aspect provides a method of imaging an object comprising:

irradiating the object with coherent EMR at respective angles of incidence using a set of S coherent EMR sources, wherein S is a positive integer; and
imaging the object by detecting at least a part of the coherent EMR reflected therefrom using a two-dimensional imaging array comprising N x M imaging devices, wherein N and M are positive integers and wherein respective imaging devices comprise an aperture lens, a two-dimensional lenslet array and an electromagnetic radiation, EMR, detector, wherein the lenslet array comprises at least P x Q lenslets, wherein P and Q are positive integers, and wherein the lenslet array is arranged between the aperture lens and the detector.

In this way, the object may be imaged at higher spatial resolution and with correction of wave-front distortions, for example due to atmospheric turbulence, as described above with respect to the first aspect.

The object, the coherent EMR at respective angles of incidence, the set of S coherent EMR sources, the two-dimensional imaging array, the N x M imaging devices, the aperture lens, the two-dimensional lenslet array and the EMR detector may be as described with respect to the first aspect.

In one example, the method comprises:

irradiating the object with the coherent EMR at the respective angles of incidence using a set of S coherent EMR sources, wherein $S \geq 2$;

imaging the object by detecting at least the part of the coherent EMR reflected therefrom using the two-dimensional imaging array;

obtaining phase relationships between the reflected coherent EMR;

passively irradiating the object with incoherent EMR; and

imaging the object by detecting, through a filter corresponding to a wavelength of the coherent EMR, at least the part of the incoherent EMR reflected therefrom using the two-dimensional imaging array.

In this way, Fourier transform fringes at the wavelength are more prominent.

In one example, the method comprises:

wherein irradiating the object with the coherent EMR comprises using a narrow band filter;

wherein irradiating the object with the coherent EMR comprises modulating the coherent EMR; and

wherein imaging the object comprises imaging the object by detecting at least the part of the modulated coherent EMR reflected therefrom using the two-dimensional imaging array.

In this way, the modulated coherent EMR may discriminate from a passive (i.e. incoherent) EMR background. Particularly, the narrow band filter provides a single wavelength snap shot of the Fourier transform at the aperture lens.

In one example, there is provided a method of imaging an object comprising:

irradiating the object with coherent EMR at respective angles of incidence using a set of S coherent EMR sources, wherein S is a positive integer; and

imaging the object by acquiring N x M plenoptic images of the object using at least a part of the coherent EMR reflected therefrom.

A third aspect provides a computer comprising at least a processor and a memory, the computer arranged to provide an image of an object from EMR detected by the apparatus according to the first aspect, wherein the computer is arranged to:

receive data corresponding to the detected EMR from the respective detectors of the N x M imaging devices;

for each respective detector, correct the data thereof for aberrations using, at least in part, images arising from the respective lenslet array;

for each respective detector, determine a transform of the corrected data;

combine the transforms for each respective detector, thereby providing a combined transform for the N x M imaging devices; and

determine the image of the object from the combined transform.

The object, the coherent EMR at respective angles of incidence, the set of S coherent EMR sources, the two-dimensional imaging array, the N x M imaging devices, the aperture lens, the two-dimensional lenslet array and the EMR detector may be as described with respect to the first aspect.

A fourth aspect provides a method of providing an image from EMR detected by the apparatus according to the first aspect, the method implemented on a computer comprising at least a memory and a processor, the method comprising:

receiving data corresponding to the detected EMR from the respective detectors of the N x M imaging devices;

for each respective detector, correcting the data thereof for aberrations using, at least in part, images arising from the respective lenslet array;

for each respective detector, determining a transform of the corrected data;

combining the transforms for each respective detector, thereby providing a combined transform for the N x M imaging devices; and

determining the image of the object from the combined transform.

The object, the coherent EMR at respective angles of incidence, the set of S coherent EMR sources, the two-dimensional imaging array, the N x M imaging devices, the aperture lens, the two-dimensional lenslet array and the EMR detector may be as described with respect to the first aspect.

A fifth aspect provides use of a coherent EMR source for irradiating an object for plenoptic imaging.

Generally, plenoptic cameras are a recent development that use arrays of independent lens instead of a single large lens to collect light from the object. A micro-lens array placed at the focus of a large objective lenses creates a matching array of light patterns on a focal plane array detector positioned at the focus of the micro-lenses. Computational post processing of these light patterns recreates an 'image' of the object of interest. It is possible to recover high resolution images even in the presence of atmospheric turbulence with plenoptic camera technology, as described below.

*Image impairment*

Image impairment may arise from:

i. optical diffraction due to finite size of primary imaging lens; and/or

ii. pixel size of the camera backplane (i.e. detectors) and while a traditional limitation for electronic image sensors, modern pixel sensors approach the diffraction limit with 1.2 $\mu$m pixels now commercially widespread; and/or

iii. air turbulence causing optical distortions of the captured image due to refractive index perturbations in the air path (often the primary limitation on optical resolution of powerful long range optics); and/or

iv. intrinsic lens aberrations within the optical imager; and/or

v. optical signal noise: various sources which reduce image contrast, examples photon shot noise, electrical signal noise; and/or

vi. relative motion: particularly angular alignment of the imager and object during the shutter exposure; and/or

vii. low light illumination, such as dawn, dusk and/or due to clouds; and/or

viii. weather effects, such as mist, fog, rain or snow.

Table 1: Intrinsic and extrinsic factors limiting resolution in long rang imaging.

| Resolution limit | Primary cause | Intrinsic/Extrinsic |
|---|---|---|
| Diffraction | Finite aperture acceptance angle | Intrinsic |
| Sampling | Finite pixel size | Intrinsic |
| Aberrations | Finite lens track length / design compatibility | Intrinsic |
| Noise | Sensor readout, shot noise | Intrinsic/Extrinsic |
| Turbulence | Air temperature, wind shear | Extrinsic |
| Motion | Camera and/or scene motion | Extrinsic |

*Impact of optical diffraction on spatial resolution*

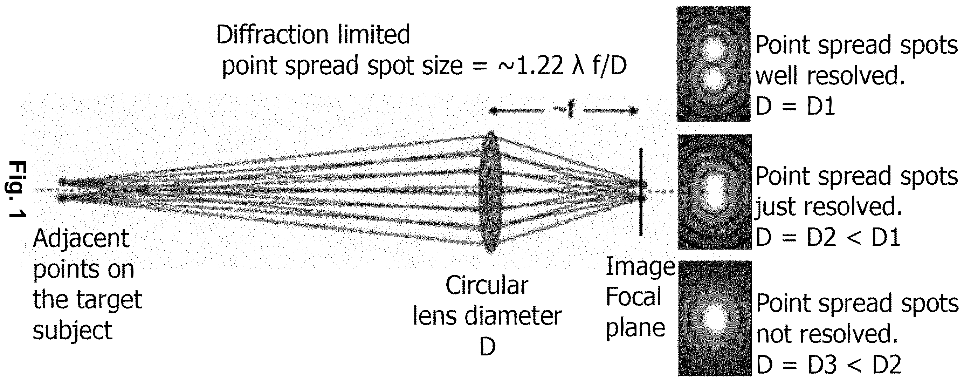

Optical diffraction determines the fundamental point spread function of any optical system. Figure 1 shows resolution of adjacent point sources. Two nearby point sources on the object when imaged onto the focal plane array become blurred spots as shows. A degree of blurring is an inverse linear function of the diameter of the imaging optics collection aperture; it limits the achievable spatial resolution of an image unless super-resolution computation techniques can be employed.

*Impact of atmospheric air turbulence on spatial resolution*

Atmospheric air turbulence gives rise to random refractive index perturbations in the air along the optical path between the object being imaged and the 'camera'. Air turbulence is created by solar heating of the atmosphere either directly, or indirectly via thermal plumes from the earth's surface, or caused other heat sources, or by wind flow past physical obstacles. Kinetic energy due to convection or wind is transferred via turbulence to successively smaller and smaller eddies until the viscosity of air then dominates the transfer process and the kinetic energy is only then converted into heat. Turbulent mixing of air masses of different temperature gives rise to refractive index variations in the air transmission path. So do turbulent pressure variations. This effect is described by the Kolmogorov model of air turbulence.

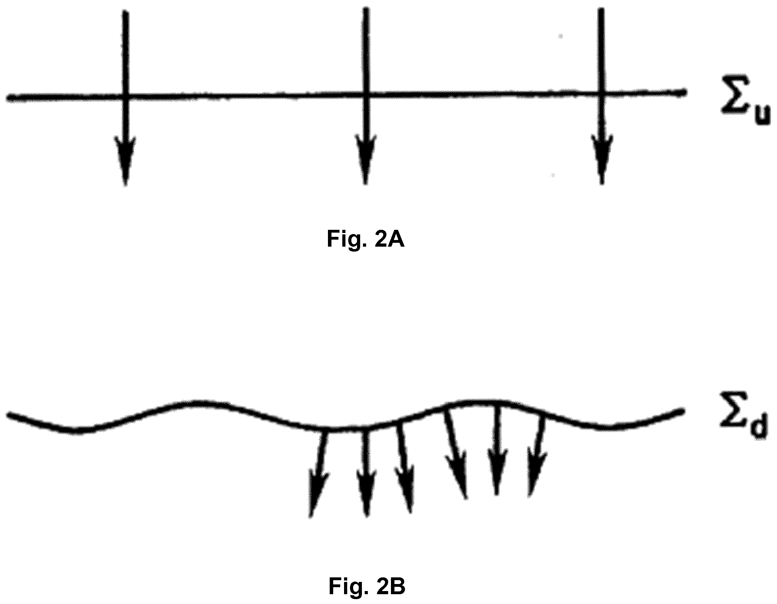

Figure 2A schematically depicts optical wavefronts in air in absence of turbulence; and Figure 2B schematically shows distortion of optical wavefronts in air due to turbulence thereof.

Refractive index n of air as a function of temperature T in Kelvin, pressure $p$ in mbars, water vapour partial pressure $v$ in mbars and wavelength in m is given by the combined Cauchy & Lorentz formula:

$$n - 1 = \frac{77.6 \times 10^{-6}}{T}(1 + 7.52 \times 10^{-3}\lambda^{-2})\left(p + 4810\frac{v}{T}\right) \approx \frac{77.6 \times 10^{-6}}{T}p$$

Random refractive index perturbations in the turbulent air create spatial distortions from the idea spherical wave front shape that would be emitted by every point in the scene. These random refractive index perturbations reduce the effective optical aperture of a large diameter camera lens, and so limit the spatial resolution in any passive optical system. Atmospheric air turbulence typically reduces the effective optical resolution aperture of a traditional optical imaging system to the Fried coherence length $r_0$ of turbulent air of typically ~2 cm to ~5 cm. If the aperture is less than the Fried coherence length $r_0$, wave fronts are effectively planar. The time evolution of atmospheric turbulence due to Kolmogorov type turbulence is given by the 'Greenwood' frequency, which typically ranges from 10s to 100s of Hz depending on atmospheric conditions.

*Long Range Imaging Resolution Requirement*

Table 2 details minimum resolution requirements and required input diameter for a conventional optical imager to positively identify certain objects at a wavelength $\lambda$ of 633 nm.

Table 2: Minimum resolution requirements and required input diameter for a conventional optical imager to positively identify certain objects at a wavelength $\lambda$ of 633 nm.

| Subject | Resolution | Input lens Diameter @ 100 m | Input lens Diameter @ 1 km | Input Lens Diameter @ 5 km | Input Lens Diameter @ 10 km | Comments |
|---|---|---|---|---|---|---|
| An unknown face | 1 mm | 77.1 mm | 770 mm | 3850 mm | 7710 mm | ~120 x 120 pixels |
| A known face | 5 mm | 15.4 mm | 154 mm | 770 mm | 1540 mm | ~24 x 24 pixels |
| Vehicle | 5 cm | 1.5 mm | 15 mm | 77 mm | 154 mm | |
| Building | 1m | 0.08 mm | 0.8 mm | 3.8 mm | 7.7 mm | |

*Long Range High Resolution Imaging*

Estimates vary for the minimum pixel resolution needed to recognise a human face. Some researchers suggest that most human observers could recognise a face from a 32 pixel x 32 pixel image of the face with 4 bit intensity resolution. This implies a collection optical aperture of -1 m diameter is required to unconditionally recognise a face at 5 km under perfect atmospheric seeing conditions that are completely free of air turbulence, at 633 nm. Such an optical system would be large, heavy, and very expensive for a system with low intrinsic optical aberrations if based on a single collection mirror/lens. However, air turbulence is in reality a fact of observational life. Therefore, long range multi-km range imaging of faces is not possible with a traditional passive optical system based on a single large primary mirror or objective lens. Hence, another approach is required, as provided by the imaging apparatus according to the first aspect.

*Air turbulence suppression using plenoptic imaging*

A Plenoptic imager uses a main objective lens or mirror which then focusses the object plane onto a close packed 2D lenslet array. A 2D detector array is located at the focal plane, behind the lens-let array. This detector samples the 'light field' consisting of the direction of arrival of rays as well as their origin on the object plane. The lenslets in the above configuration image the aperture of the objective lens onto the detector array and so provide information on the local wave-front distortion. Wave front gradients can be computed by cross correlation of every synthetic aperture image with respect to one of them. Computational processing of the focal plane data COMBINED with deconvolution computational techniques create a high resolution digital image comparable to a conventional camera. Recent developments allow atmospheric turbulence to be corrected such that good image resolutions are achieved with signal to noise levels of 30dB or better.

*Synthetic Apertures for long range sub-diffraction-limited Visible Imaging (SAVI)*

SAVI is a development of a recent established technique used in microscopy to achieve super-resolution called Fourier Ptychography. Fourier Ptychography microscopy from which the SAVI technique is developed uses a 2D array of LED light sources to sequentially illuminate the object whilst capturing a corresponding succession of images using each LED illumination source. This allows an iterative recovery of the phase of the light fields that are imaged using Fourier techniques and facilitates the creation of large synthetic aperture. This enables super-resolution images to be computationally created that would beyond the spatial resolution of the basic optical system. The same super-resolution images can be created by translating the sample between image captures and using a single light source; an imaging process called ptychography. Synthetic Aperture Radar captures a sequence of radar returns with ~ps timing accuracy which allows the phase of the ensemble of return signals to be accurately combined. A directly equivalent approach using light would require a sequence of optical return signals to be captured with ~fs timing accuracy - this is not currently realistic. SAVI analyses the captured images in Fourier Space instead to recover the phase data of the individual images. The coherent light incident on the plane of the system's main objective lens is a Fourier Transform of the object being imaged. Numerical calculation of the Fourier transform of each image recorded followed by stitching together of the mosaic of partially overlapping Fourier transform samples of the object allows higher frequency components of the object's overall Fourier Transform to be captured. An inverse Fourier Transform of the composite Fourier transform formed by the stitching process produces allows a high super-resolution image to be formed, which corresponds to a larger synthetic aperture than the individual camera. The image array forming the synthetic aperture can be captured either by translating the camera, or alternatively by sequential illumination using a wide angular fan of coherent sources.

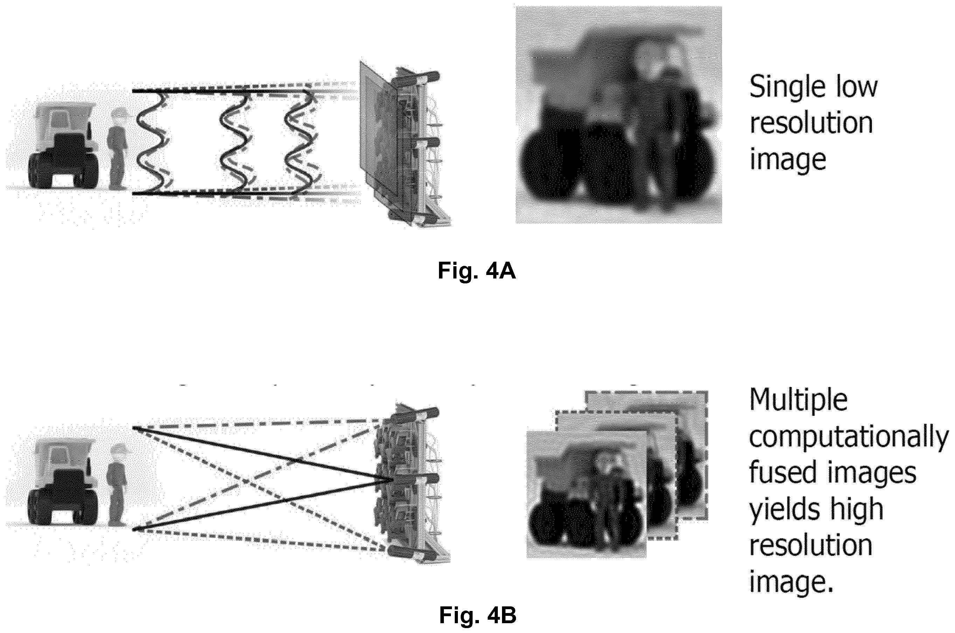

Figure 4A schematically depicts a conventional imaging apparatus and Figure 4B schematically depicts a conventional SAVI apparatus. Particularly, as shown in Figure 4A, a conventional imaging apparatus using passive illumination with a fixed aperture size of 12.5 mm induces a diffraction spot size of 50 mm on an object 1 km away, destroying relevant image features. Using the conventional SAVI apparatus, as shown in Figure 4B, an array of such conventional imaging apparatus using coherent illumination creates a synthetic aperture an order of magnitude larger, resulting in a diffraction sport size of 5 mm on the object 1 km away.
SAVI generally requires a ≥65% overlap between the sampling optical aperture for adjacent images in the 2D array of images captured is required to enable phase retrieval of the optical beams to be successful. SAVI generally requires monochromatic illumination sources to provide coherent illumination. Without coherent illumination, it is not possible to create an enlarged synthetic aperture that overcomes traditional optical diffraction limits. Instead of moving the camera between successive image captures, alternatively the illumination angle of the coherent source can be changed. The ≥65% overlap requirement cannot be achieved with a conventional plenoptic lens array. Hence, the plenoptic lens array must be either translated mechanically or the object illuminated by an angular array of illumination sources. Conventional SAVI involves a stationary object such that a series of images may be captured with a conventional (non-plenoptic) camera that is tracked along an x-y overlapping track to form a synthetic aperture. However, dynamic (i.e. moving) objects would require camera arrays to capture data in 1 shot (i.e. simultaneously). Similarly, acquiring an image of a stationary object from a camera mounted in a moving vehicle would also require camera arrays to capture data in 1 shot (i.e. simultaneously). That is, relative motion between the imaging apparatus (i.e. camera array) and the object requires image data to be acquired in 1 shot (i.e. simultaneously).
Hence, the solution for relative motion is to illuminate the object with multiple coherent sources, thereby overcoming the >65% adjacent aperture sampling overlap requirement of SAVI. Backscattered light is captured by an array of imaging devices, providing a true multiple-input, multiple output (MIMO) configuration.

*MIMO optical imaging*

Synthetic Apertures for long range sub-diffraction-limited Visible Imaging (SAVI) is closer to a true MIMO optical imaging approach. A synthetic aperture is created by either:

1. Illuminating with a single coherent laser source and translating a camera across a synthetic aperture equal in size to that of the conventional aperture needed for the required spatial resolution while capturing a sequence of overlapping images; or
2. Illuminating the scene with a sequence of coherent lasers positioned in an array across the required synthetic aperture and capturing with a 2D array of smaller cameras.

The synthetic aperture yields an image far superior to more expensive camera optics. Atmospheric turbulence correction using SAVI has not yet been investigated. The optical hardware requirements of a plenoptic imaging system are less demanding than an optical system using adaptive optics correction techniques. One weakness of current plenoptic imaging cameras is the use of a large objective lens or mirror at the front end of the imaging cameras but this may be readily addressed. The plenoptic micro-lens array allows the wave-front distortion to measured over the aperture of the objective lens/mirror. From this data, it is possible to computationally correct out wave-front distortion due to turbulence effects. In other words, the imaging apparatus combines SAVI technology with a plenoptic micro-lens array. The use of SAVI techniques allows smaller diameter (and therefore cheaper) optics to be employed while plenoptic techniques may be used to correct for wavefront distortions, for example atmospheric turbulence effects, of each plenoptic camera in the SAVI camera array. If semi-covert SAVI imaging is required, the optical wavelength for the coherent illumination source could be located in the near IR, for example, so that silicon based focal plane arrays can be used, and to reduce the adverse diffraction limit implications of operation at longer optical wavelengths. In addition, MIMO sonar work shows the benefit of orthogonal encoding of transmitted acoustic signals. Hence, the coherent EMR optical signals be orthogonally encoded for analogous benefit.

*MIMO sonar imaging*

MIMO sonar is of interest because it is predicted to provide major improvements in spatial image resolution capability according to simulations, and may provide valuable insights. MIMO sonar offers a degree of localisation not possible with a single-input, single output (SISO) system. To achieve super-resolution using MIMO sonar the following conditions should be respected:

i. Independent views: the acoustic transceivers must be sufficiently spaced to ensure the independence of each view;
ii. De-correlation: the total number of views has to be large enough to ensure the scatter's de-correlation;
iii. Broadband: in order to achieve the range resolution needed, the MIMO system has to use broadband pulses for range compression;
iv. Simulated transmit signals used in this work were not coded and consisted of simple pulses; and
v. Signal orthogonality means there is zero cross-correlation between different signal paths detected by the receivers.

These conditions may be applied analogously to optical imaging, so as to achieve super-resolution using MIMO optical imaging

*Plenoptic imaging*

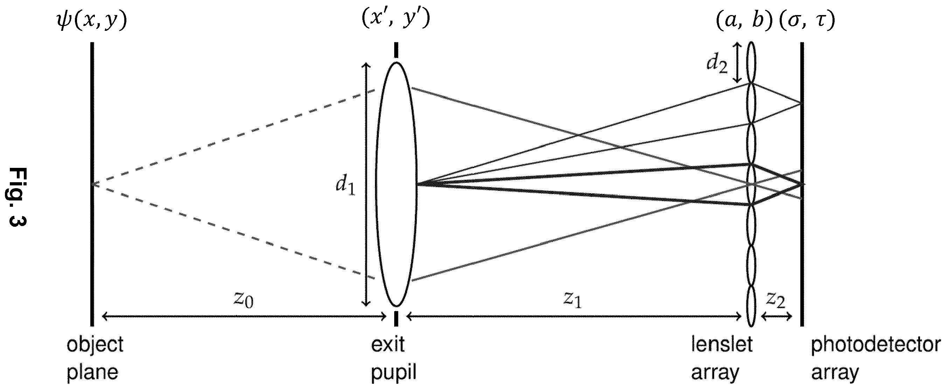

Wave optic expressions for plenoptic camera image formation may be derived, as described below for a simple example, following Goodman, J.W. (2004) Introduction to Fourier Optics, 3rd edition, Roberts and Company. For simplicity, consider a plenoptic camera arranged according to Figure 3.

$\psi(x,y)$ is the scalar field at the object plane. Propagation from the object plane to the lenslet array follows that of a standard imaging setup, in which the lenslet array is positioned at the normal image plane. Hence, the impulse response of this part of the imaging system is given by the Fraunhofer diffraction pattern of the main lens pupil $P_1(x',y')$

$$h_1(a, b; x, y) = K \iint_{-\infty}^{\infty} P_1(x', y') e^{-j\frac{2\pi}{\lambda z_1}[(a-Mx)x' + (b-My)y']} dx' dy'$$

where $K$ *is* a constant and M is the magnification of the plenoptic camera given by $= -z_1/z_0$.

Hence, due to linearity of wave propagation, the scalar field in front of the lenslet array is given by:

$$\psi(a,b) = \iint_{-\infty}^{\infty} h_1(a,b;x,y)\psi(x,y)dxdy$$

If there are $N \times N$ identical microlenses, each having a diameter $d_2$ and a focal length $f_2 = z_2$, propagation after the lenslet array is given by:

$$\tilde{\psi}(a,b) = \psi(a,b) \sum_{m=1}^{N} \sum_{n=1}^{N} P_2\left(a - md_2, b - nd_2\right) \times e^{-j\frac{\pi}{\lambda f_2}\left[(a-md_2)^2 + (b-nd_2)^2\right]}$$

where $P_2(a, b)$ is the pupil function of the microlens.

Hence, propagation from the lenslet array to the detector array is given by Fresnel propagation with the impulse response given by:

$$h_2(\sigma,\tau) = \frac{e^{j\frac{2\pi}{\lambda}z_2}}{j\lambda z_2} e^{\frac{j\pi}{\lambda z_2}(\sigma^2 + \tau^2)}$$

Due to superposition, the scalar field at the detector array is given by:

$$\psi(\sigma,\tau) = \iint_{-\infty}^{\infty} h_2(\sigma - a, \tau - b)\tilde{\psi}(a,b)dadb$$

The image may be reconstructed, for example, by backpropagation of the field from the detector array to an arbitrary object plane, such as described for coherent and incoherent approaches in Junker, A., Stenau, T. and Brenner, K.H. (2014) Scalar wave-optical reconstruction of plenoptic camera images, Appl. Opt. 53, 5784 - 5790.

*SAVI*

The general goal of SAVI is to capture high resolution images of objects that are a considerable distance away from the camera, e.g. resolve a face 1000 meters away. Passive camera systems use available (incoherent) illumination sources such as the sun and suffer from significant diffraction blur. Existing super resolution methods may be able to effectively reduce the amount of blur by a factor of two, which may be insufficient to resolve enough detail to recover the object of interest. In order to resolve even smaller features, assume a coherent or partially coherent illumination source; that is, active illumination is provided.

Like other multi-image super-resolution methods, the imaging apparatus captures a series of low resolution images which are used to recover a high resolution image. Multiple images using a coherent illumination source are acquired, where each image is from a different (known) position in the XY plane. For simplicity, assume the camera positions coincide with a regular grid, though this is not necessary. It should be noted that the same result is obtained by leaving the camera stationary and moving the illumination source.

*A. Image Formation Model*

For simplicity, assume a single fixed illumination source (i.e. coherent EMR source), which can either be co-located with or external to the imaging apparatus. The source should be quasi-monochromatic, with centre wavelength $\lambda$. For color imaging, multiple quasi-monochromatic sources (i.e., laser diodes) are effective. The source emits a field that is spatially coherent across the plane which contains our object of interest, $P(x,y)$ and assumed to occupy some or all of the imaging system field of view.

The illumination field, $u(x,y)$, will interact with the object, and a portion of this field will reflect off the object towards the imaging apparatus. For our initial experiment, assume the object is thin and may be described by the 2D complex reflectivity function $o(x,y)$. Extension to surface reflectance from 3D objects follows from this analysis. Under the thin object approximation, the field emerging from the object is given by the product $\psi(x,y) = u(x,y)o(x,y)$. This then propagates a large distance z to the far field, where our imaging system occupies the plane $S(x',y')$.

Under the Fraunhofer approximation, the field at $S(x',y')$ is connected to the field at the object plane by a Fourier

transform:

$$\hat{\psi}(x', y') = \frac{e^{jkz} e^{\frac{jk}{2z}(x'^2 + y'^2)}}{j\lambda z} \mathrm{F}_{1/\lambda z}[\psi(x, y)]$$

where $k = 2\pi/\lambda$ is the wavenumber and $\mathrm{F}_{1/\lambda z}$ denotes a two dimensional Fourier transform scaled by $1/\lambda z$. For the remainder of this manuscript, we will drop multiplicative phase factors and coordinate scaling from our simple model. The following analysis also applies under the Fresnel approximation (i.e. in the near field of the object). The far field pattern, which is effectively the Fourier transform of the object field, is intercepted by the aperture of our camera. The limited camera aperture may be described using the function $A(x' - c_{x'}, y' - c_{y'})$, which is centred at coordinate $(c_{x'}, c_{y'})$ in the plane $S(x', y')$ and passes light with unity transmittance within a finite diameter $d$ and completely blocks light outside (i.e., it is a "circ" function).

The optical field immediately after the aperture is given by the product:

$$\hat{\psi}(x', y')\, A(x' - c_{x'}, y' - c_{y'})$$

This bandlimited field then propagates to the image sensor plane. Again neglecting constant multiplicative and scaling factors, this final propagation may be represented using a Fourier transform. Since the camera sensor only detects optical intensity, the image measured by the camera is:

$$I\left(x, y, c_{x'}, c_{y'}\right) \propto \left| \mathrm{F}[\hat{\psi}(x', y')\, A(x' - c_{x'}, y' - c_{y'})] \right|^2$$

In a single image, the low pass nature of the aperture results in a reduced resolution image. For an aperture of diameter $d$ and focal length $f$, diffraction limits the smallest resolvable feature within one image to be approximately $1.22\lambda f/d$.

*B. FP to Improve Resolution*

Ptychography presents one strategy to overcome the diffraction limit by capturing multiple images and synthetically increasing the effective aperture size. The series of captured images is used to recover the high resolution complex field in the aperture plane and subsequently a high resolution image.

To achieve this, the imaging apparatus is re-centered at multiple locations, $(c_{x'_i}, c_{y'_i})$, and one image captured at the ith location, for $i = 1, \ldots, N$. This transforms the equation above into a four-dimensional discrete data matrix. The $N$ images can be captured in a number of ways, one can: physically translate the camera to $N$ positions, construct a camera array with N cameras to simultaneously capture images, fix the camera position and use a translating light source, or use arbitrary combinations of any of these techniques.

If aperture centres are selected such that they are separated by the diameter $d$ across a rectilinear grid, then values are approximately measured from the object spectrum across an aperture that is $\sqrt{N}$ times larger than what is obtained by a single image. Thus, it appears that such a strategy, capturing $N$ images of a coherently illuminated object in the far field, may be combined together to improve the diffraction-limited image resolution to $1.22\lambda f / \sqrt{N} d$.

However, since the detector cannot measure phase, this sampling strategy is not effective as-is. Instead, it is necessary to ensure the aperture centres overlap by a certain amount (i.e. adjacent image captures are separated by a distance $\delta < d$ along both $x'$ and $y'$). This yields a certain degree of redundancy within the captured data, which a ptychographic post-processing algorithm may utilize to simultaneously determine the phase of the field at plane $S(x', y')$. Typically, $\delta \sim 0.25d$. Below is described a suitable post processing strategy that converts the data matrix $I(x, y, c_{x'}, c_{y'})$ into a high-resolution complex object reconstruction.

*C. Algorithm for image recovery*

Using the imaging apparatus (i.e. coherent camera array) measurements for $I(x, y, c_{x'}, c_{y'})$, the goal is to recover the complex-valued, high-resolution field $\hat{\psi}(x', y')$. The image measured with the imaging apparatus at location $(c_{x'_i}, c_{y'_i})$ is denoted by:

$$I_i = |\psi_i|^2 = \left|\mathrm{FR}_{\Omega_i}\hat{\psi}\right|^2$$

where $\psi_i = \mathrm{FR}_{\Omega_i}\hat{\psi}$ denotes the complex-valued, bandlimited field whose intensity is measured at the image sensor, $\hat{\psi}$ denotes the complex-valued field at the Fourier plane (i.e. the aperture plane), and $\mathrm{R}_{\Omega_i}\hat{\psi}$ denotes an aperture operator that sets all the entries of $\hat{\psi}(x',y')$ outside the set $\Omega_i = \{(x,y): |x - c_{x'_i}|^2 + |y - c_{y'_i}|^2 \le d/2\}$ to zero.

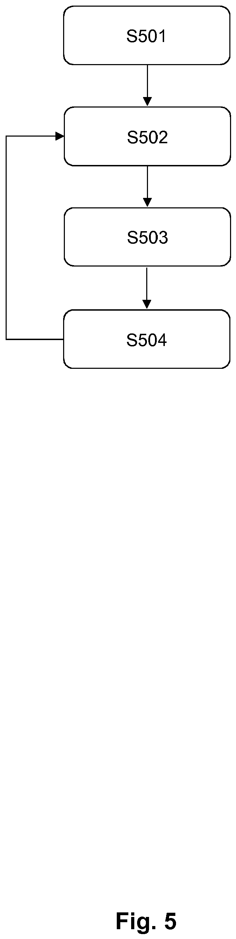

To recover the high-resolution $\hat{\psi}$ from a sequence of $N$ low resolution, intensity measurements, $\{I_i\}_{i=1}^{N}$, an alternating minimization-based phase retrieval problem is used, as shown in Figure 5. The recovery algorithm is based on the error-reduction phase retrieval algorithm.

Hence, the following problem is to be solved:

$$\hat{\psi}^* = \arg_{\hat{\psi}}\min \sum_i \left|\left|\psi_i - \mathrm{FR}_{\Omega_i}\hat{\psi}\right|\right|_2 \; s.t.\; |\psi_i|^2 = I_i$$

This may be achieved by alternatively constraining the support of $\hat{\psi}$ and the squared magnitudes of $\hat{\psi}$. The initial estimate of $\hat{\psi}^0$ is set to be a scaled Fourier transform of the mean of the low resolution images.

Figure 5 schematically depicts a method of image recovery for a method of providing an image according to an exemplary embodiment.

At S501, respective images are measured with the imaging apparatus at locations $(c_{x'_i}, c_{y'_i})$, denoted by:

$$I_i = |\psi_i|^2 = \left|\mathrm{FR}_{\Omega_i}\hat{\psi}\right|^2$$

For every iteration (k), the following three steps are performed:

At S502, compute complex-valued images at the sensor plane using the existing estimate of the field at the Fourier plane, $\hat{\psi}^k$:

$$\psi_i^k = \mathrm{FR}_{\Omega_i}\hat{\psi}^k \text{ for all } i$$

At S503, replace the magnitudes of $\psi_i^k$ with the magnitude of the corresponding observed images $I_i$:

$$\psi_i^k \leftarrow \sqrt{\frac{I_i}{|\psi_i^k|^2}}\, \psi_i^k \text{ for all } i$$

At S504, convert to the Fourier domain and update the estimate of $\hat{\psi}$ by solving the following regularized, least-squares problem:

$$\psi^{k+1} \leftarrow \hat{\psi} \text{ minimize} \sum_i \left|\left|\psi_i^k - \mathrm{FR}_{\Omega_i}\hat{\psi}\right|\right|_2^2 + \tau \left|\left|\hat{\psi}\right|\right|_2^2$$

where $\tau > 0$ is an appropriately chosen regularization parameter. Tikhonov regularization is used for numerical stability during reconstruction.

From S504, convert back to the spatial domain and return to S502. Constraints on the image domain magnitude and the Fourier domain supper are thus enforced alternately until convergence or a maximum iteration limit is met.

This problem has a closed form solution, which can be efficiently computed using fast Fourier transforms.

*SAVI combined with plenoptic imaging*

To obtain an image having higher spatial resolution and correction of wave-front distortions, for example due to atmospheric turbulence, from the imaging apparatus:

> 1. for each plenoptic image acquired by the imaging apparatus, reconstruct the respective images, for example, by backpropagation of the field from the detector array to an arbitrary object plane, to thereby correct for wave-front distortions, for example due to atmospheric turbulence; and
> 2. using the reconstructed images, recover the complex-valued, high-resolution field $\hat{\psi}(x',y')$.

According to the present invention there is provided, as set forth in the appended claims. Also provided is. Other features of the invention will be apparent from the dependent claims, and the description that follows.

*Definitions*

Throughout this specification, the term "comprising" or "comprises" means including the component(s) specified but not to the exclusion of the presence of other components. The term "consisting essentially of" or "consists essentially of" means including the components specified but excluding other components except for materials present as impurities, unavoidable materials present as a result of processes used to provide the components, and components added for a purpose other than achieving the technical effect of the invention, such as colourants, and the like.

The term "consisting of" or "consists of" means including the components specified but excluding other components.

Whenever appropriate, depending upon the context, the use of the term "comprises" or "comprising" may also be taken to include the meaning "consists essentially of" or "consisting essentially of", and also may also be taken to include the meaning "consists of" or "consisting of".

The optional features set out herein may be used either individually or in combination with each other where appropriate and particularly in the combinations as set out in the accompanying claims. The optional features for each aspect or exemplary embodiment of the invention, as set out herein are also applicable to all other aspects or exemplary embodiments of the invention, where appropriate. In other words, the skilled person reading this specification should consider the optional features for each aspect or exemplary embodiment of the invention as interchangeable and combinable between different aspects and exemplary embodiments.

**Brief description of the drawings**

For a better understanding of the invention, and to show how exemplary embodiments of the same may be brought into effect, reference will be made, by way of example only, to the accompanying diagrammatic Figures, in which:

Figure 1 schematically depicts optical resolution of adjacent point sources;

Figure 2A schematically depicts optical wavefronts in air in absence of turbulence; and Figure 2B schematically shows distortion of optical wavefronts in air due to turbulence thereof.

Figure 3 schematically depicts a conventional plenoptic camera;

Figure 4A schematically depicts a conventional imaging apparatus and Figure 4B schematically depicts a conventional SAVI apparatus;

Figure 5 schematically depicts a method of image recovery for a method of providing an image according to an exemplary embodiment;

Figure 6 schematically depicts an imaging apparatus according an exemplary embodiment;

Figure 7 schematically depicts a method of imaging an object according to an exemplary embodiment;

Figure 8 schematically depicts a method of providing an image according to an exemplary embodiment;

Figure 9 shows an image acquired by a conventional imaging apparatus;

Figure 10 shows unprocessed images acquired by an imaging apparatus according to an exemplary embodiment;

Figure 11 shows reconstructed images 12, provided using the method according to Figure 8; and

Figure 12 shows a recovered image 13, provided using the method according to Figure 8.

**Detailed Description of the Drawings**

Figure 5 schematically depicts the method of image recovery for a method of providing an image according to an exemplary embodiment, as described above.

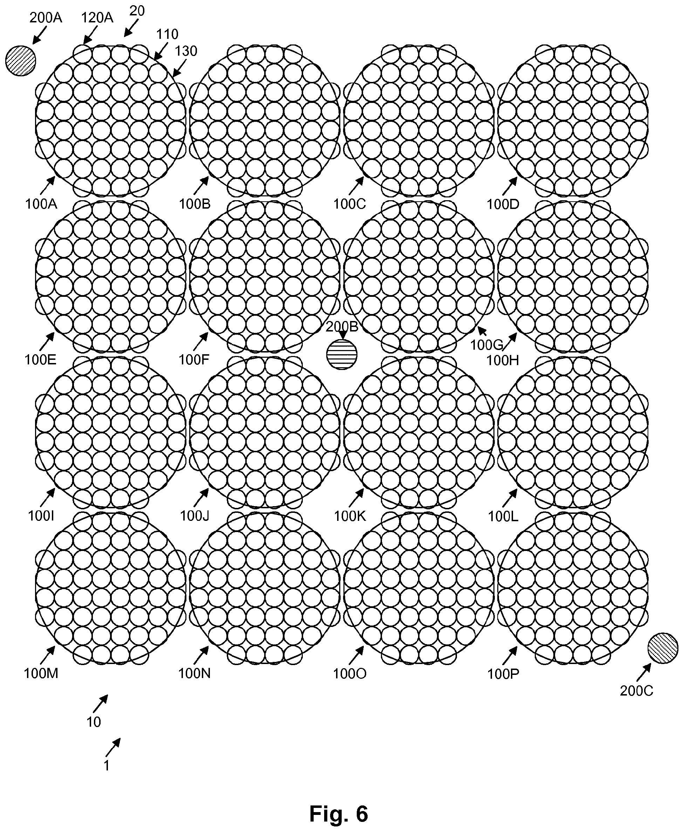

Figure 6 schematically depicts an imaging apparatus 10 according an exemplary embodiment.

The imaging apparatus 1 comprises a two-dimensional imaging array 10 comprising N x M imaging devices 100A to 100P, wherein N and M are positive integers. In this example, N = M = 4. The respective imaging devices 100A to 100P comprise an aperture lens 110, a two-dimensional lenslet array 20 and an electromagnetic radiation, EMR, detector 130. The lenslet array 20 comprises at least P x Q lenslets 120, wherein P and Q are positive integers. In this example, P = Q = 6 and the lenslet array 20 includes 52 lenslets 120, in which 1 x 4 lenslets are arranged on each side of a 6 x 6 lenslet matrix. The lenslet array 20 is arranged between the aperture lens 110 and the detector 130. The imaging apparatus 11 comprises a set of S coherent EMR sources 200A to 200C, wherein S is a positive integer. In this example, S = 3. The respective sources 200A to 200C are arranged to irradiate an object with coherent EMR at respective angles of incidence. Particularly, the sources 200A to 200C are arranged top left, centre and bottom right, respectively. In this way, the object is illuminated by an angular array of illumination sources.

In this example, S = 3 and the apparatus 1 is arranged to successively irradiate the object using the respective EMR sources 200A to 200C.

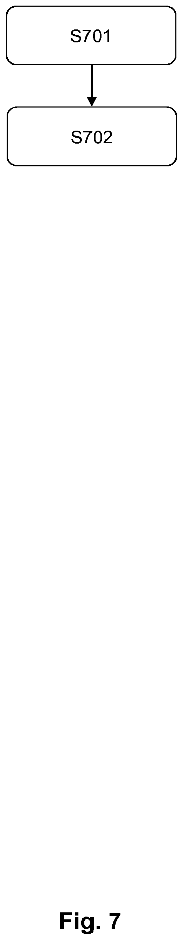

Figure 7 schematically depicts a method of imaging an object according to an exemplary embodiment.

At S701, the object is irradiated with coherent EMR at respective angles of incidence using a set of S coherent EMR sources, wherein S is a positive integer.

At S702, the object is imaged by detecting at least a part of the coherent EMR reflected therefrom using a two-dimensional imaging array comprising N x M imaging devices, wherein N and M are positive integers and wherein respective imaging devices comprise an aperture lens, a two-dimensional lenslet array and an electromagnetic radiation, EMR, detector, wherein the lenslet array comprises at least P x Q lenslets, wherein P and Q are positive integers, and wherein the lenslet array is arranged between the aperture lens and the detector.

The method may include any of the steps described herein.

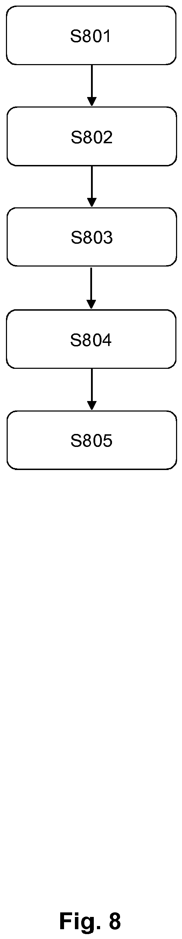

Figure 8 schematically depicts a method of providing an image according to an exemplary embodiment. Particularly, the method is of providing the image from EMR detected by an imaging apparatus according to an exemplary embodiment. The method implemented on a computer comprising at least a memory and a processor.

At S801, data corresponding to the detected EMR are received from the respective detectors of the N x M imaging devices.

At S802, for each respective detector, the data thereof are corrected for aberrations using, at least in part, images arising from the respective lenslet array, for example, by backpropagation of the field from the detector array to an arbitrary object plane, to thereby correct for wave-front distortions, for example due to atmospheric turbulence, as described above.

At S803, for each respective detector, a transform of the corrected data is determined.

At S804, the transforms for each respective detector are combined, thereby providing a combined transform for the N x M imaging devices.

At S805, the image of the object is determined from the combined transform.

The method may include any of the steps described herein, particularly as described with respect to Figure 5.

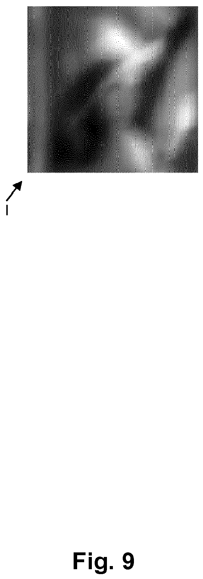

Figure 9 shows an image I acquired by a conventional imaging apparatus. Particularly, the image I is aberrated due to wave-front distortions, for example due to atmospheric turbulence, and due to diffraction blur.

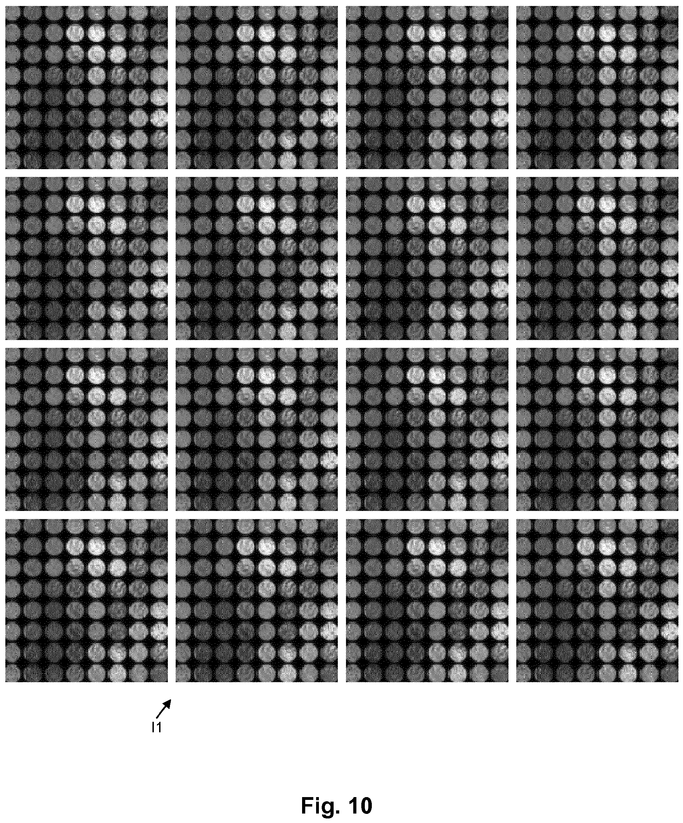

Figure 10 shows unprocessed images I1 acquired by an imaging apparatus according to an exemplary embodiment.

Particularly, Figure 10 shows N x M plenoptic images, acquired by the imaging apparatus 1, as described above, where N = M = 4. Briefly, the N x M plenoptic images each comprise 52 images, corresponding to the 52 lenslets of the lenslet array 20. The N x M plenoptic images are acquired simultaneously.

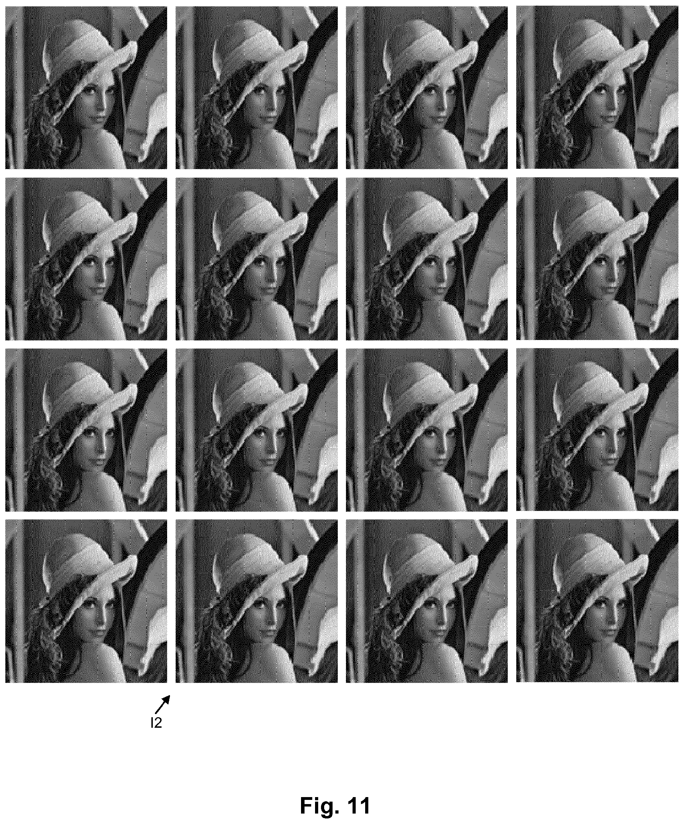

Figure 11 shows reconstructed images 12, provided using the method according to Figure 8.

Particularly, Figure 11 shows the reconstructed images I2 after completing S802. Briefly, each of the N x M reconstructed images is reconstructed from the respective image plenoptic image of Figure 11, for example, by backpropagation of the field from the detector array to an arbitrary object plane, to thereby correct for wave-front distortions, for example due to atmospheric turbulence, as described above.

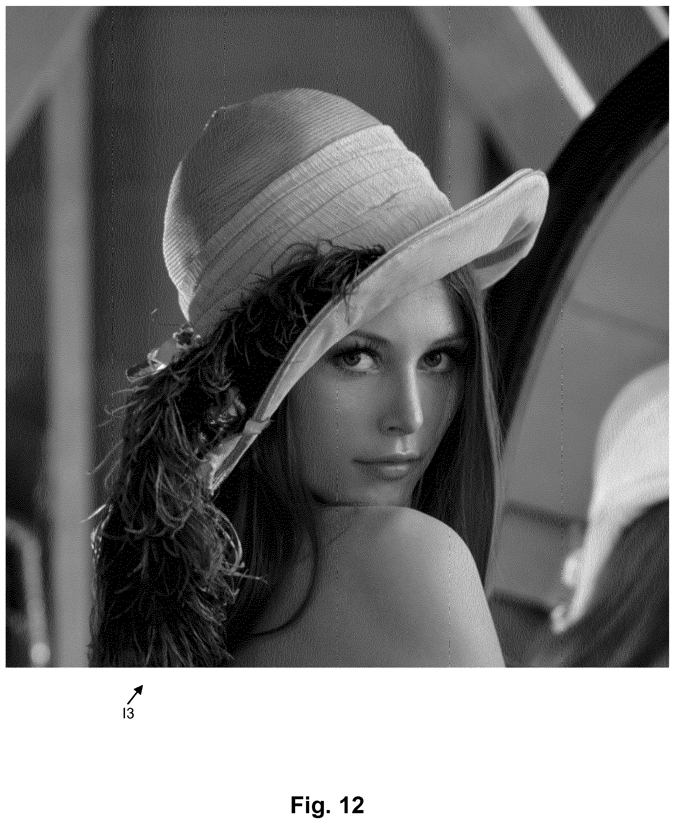

Figure 12 shows a recovered image 13, provided using the method according to Figure 8.

Particularly, Figure 12 shows the recovered image I3 after completing S805. Briefly, the complex-valued, high-resolution field $\hat{\psi}(x',y')$ is recovered from the reconstructed N x M reconstructed images of Figure 12.

Although a preferred embodiment has been shown and described, it will be appreciated by those skilled in the art that various changes and modifications might be made without departing from the scope of the invention, as defined in the appended claims and as described above.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at most some of such features and/or steps are mutually exclusive.

Each feature disclosed in this specification (including any accompanying claims, and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. An imaging apparatus comprising:

   a two-dimensional imaging array comprising N x M imaging devices, wherein N and M are positive integers and wherein respective imaging devices comprise an aperture lens, a two-dimensional lenslet array and an electromagnetic radiation, EMR, detector, wherein the lenslet array comprises at least P x Q lenslets, wherein P and Q are positive integers, and wherein the lenslet array is arranged between the aperture lens and the detector; and
   a set of S coherent EMR sources, wherein S is a positive integer, wherein respective sources are arrangeable to irradiate an object with coherent EMR at respective angles of incidence.

2. The apparatus according to claim 1, wherein $N \geq 1$, $M \geq 1$ and $S \geq 1$.

3. The apparatus according to any previous claim, wherein $N \geq 1$, $M \geq 2$ and $S \geq 1$.

4. The apparatus according to any previous claim, wherein $N \geq 2$, $M \geq 2$ and $S \geq 1$.

5. The apparatus according to any previous claim, wherein $S = 1$ and wherein the EMR source is arrangeable in a first configuration to irradiate the object with coherent EMR at a first angle of incidence and in a second configuration to irradiate the object with coherent EMR at a second angle of incidence.

6. The apparatus according to any previous claim, wherein $S \geq 2$ and wherein the apparatus is arranged to successively irradiate the object using the respective EMR sources.

7. The apparatus according to any previous claim, wherein $P \geq 8$ and $Q \geq 8$, preferably wherein $P \geq 32$ and $Q \geq 32$.

8. The apparatus according to any previous claim, wherein the coherent EMR has a wavelength of $\leq 1\ \mu m$.

9. The apparatus according to any previous claim, wherein the aperture lens has a focal length of $\geq 28$ mm.

10. The apparatus according to any previous claim, wherein the respective two-dimensional lenslet arrays are arranged spaced apart from the respective aperture lenses by respective focal lengths thereof.

11. The apparatus according to any previous claim, wherein the respective detectors are arranged spaced apart from the respective lenslet arrays by respective focal lengths thereof.

12. A method of imaging an object comprising:

   irradiating the object with coherent EMR at respective angles of incidence using a set of S coherent EMR sources, wherein S is a positive integer; and
   imaging the object by detecting at least a part of the coherent EMR reflected therefrom using a two-dimensional imaging array comprising N x M imaging devices, wherein N and M are positive integers and wherein respective imaging devices comprise an aperture lens, a two-dimensional lenslet array and an electromagnetic radiation, EMR, detector, wherein the lenslet array comprises at least P x Q lenslets, wherein P and Q are positive integers, and wherein the lenslet array is arranged between the aperture lens and the detector.

13. A computer comprising at least a processor and a memory, the computer arranged to provide an image of an object from EMR detected by the apparatus according to any of claims 1 to 12, wherein the computer is arranged to:

    receive data corresponding to the detected EMR from the respective detectors of the N x M imaging devices;
    for each respective detector, correct the data thereof for aberrations using, at least in part, images arising from the respective lenslet array;
    for each respective detector, determine a transform of the corrected data;
    combine the transforms for each respective detector, thereby providing a combined transform for the N x M imaging devices; and
    determine the image of the object from the combined transform.

14. A method of providing an image from EMR detected by the apparatus according to any of claims 1 to 12, the method implemented on a computer comprising at least a memory and a processor, the method comprising:

    receiving data corresponding to the detected EMR from the respective detectors of the N x M imaging devices;
    for each respective detector, correcting the data thereof for aberrations using, at least in part, images arising from the respective lenslet array;
    for each respective detector, determining a transform of the corrected data;
    combining the transforms for each respective detector, thereby providing a combined transform for the N x M imaging devices; and
    determining the image of the object from the combined transform.

15. Use of a coherent EMR source for irradiating an object for plenoptic imaging.

Fig. 1

Fig. 2A

Fig. 2B

**Fig. 3**

Fig. 4A

Fig. 4B

```
┌─────────────────┐
│      S501       │
└─────────────────┘
         │
         ▼
┌─────────────────┐
│      S502       │◀──┐
└─────────────────┘   │
         │            │
         ▼            │
┌─────────────────┐   │
│      S503       │   │
└─────────────────┘   │
         │            │
         ▼            │
┌─────────────────┐   │
│      S504       │───┘
└─────────────────┘
```

**Fig. 5**

**Fig. 6**

```
┌─────────────────────┐
│                     │
│        S701         │
│                     │
└─────────────────────┘
           │
           ▼
┌─────────────────────┐
│                     │
│        S702         │
│                     │
└─────────────────────┘
```

**Fig. 7**

S801

S802

S803

S804

S805

**Fig. 8**

**Fig. 9**

**Fig. 10**

**Fig. 11**

I3

**Fig. 12**

Europäisches Patentamt

European Patent Office

Office européen des brevets

## EUROPEAN SEARCH REPORT

Application Number

EP 19 27 5128

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/063691 A1 (WHIPPLE LUCAS ALLEN [US]) 3 March 2016 (2016-03-03) * paragraphs [0002], [0027], [0029] * * page 2; figure 2 * | 1-15 | INV. H04N5/225 G02B3/00 G02B30/26 |
| A | EP 3 480 648 A1 (MARVEL RES LTD [HK]) 8 May 2019 (2019-05-08) * the whole document * | 1-15 | |
| A | US 2018/056990 A1 (ELIE LARRY DEAN [US] ET AL) 1 March 2018 (2018-03-01) * the whole document * | 1-15 | |
| | | | TECHNICAL FIELDS SEARCHED (IPC) H04N G02B |

The present search report has been drawn up for all claims

| Place of search | Date of completion of the search | Examiner |
|---|---|---|
| Munich | 24 April 2020 | Denise, Christophe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 27 5128

This annex lists the patent family members relating to the patent documents cited in the above-mentioned European search report.
The members are as contained in the European Patent Office EDP file on
The European Patent Office is in no way liable for these particulars which are merely given for the purpose of information.

24-04-2020

| Patent document cited in search report | | Publication date | Patent family member(s) | | Publication date |
|---|---|---|---|---|---|
| US 2016063691 | A1 | 03-03-2016 | US | 2016063691 A1 | 03-03-2016 |
| | | | WO | 2016036364 A1 | 10-03-2016 |
| EP 3480648 | A1 | 08-05-2019 | CN | 107991838 A | 04-05-2018 |
| | | | EP | 3480648 A1 | 08-05-2019 |
| | | | HK | 1252601 A2 | 31-05-2019 |
| | | | TW | 201919404 A | 16-05-2019 |
| | | | US | 2019141226 A1 | 09-05-2019 |
| US 2018056990 | A1 | 01-03-2018 | CN | 106485198 A | 08-03-2017 |
| | | | DE | 102016115541 A1 | 02-03-2017 |
| | | | RU | 2016134255 A | 01-03-2018 |
| | | | US | 9557741 B1 | 31-01-2017 |
| | | | US | 2017137024 A1 | 18-05-2017 |
| | | | US | 2018056990 A1 | 01-03-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GOODMAN, J.W.** Introduction to Fourier Optics. Roberts and Company, 2004

- **JUNKER, A. ; STENAU, T. ; BRENNER, K.H.** *Scalar wave-optical reconstruction of plenoptic camera images, Appl. Opt.,* 2014, vol. 53, 5784-5790